# EUROPÄISCHE PATENTANMELDUNG

(11) **EP 2 290 503 A1**
(43) Veröffentlichungstag der Anmeldung: **02.03.2011**
(21) Anmeldenummer: 10002610.3
(22) Anmeldetag: 12.03.2010
(51) Int. Cl.: G06F 3/023, G06F 3/038

(54) **Umschaltvorrichtung**

(30) Priorität: 25.08.2009 DE 102009038543
(71) Anmelder: Pepperl + Fuchs GmbH, 68307 Mannheim (DE)
(72) Erfinder: Adler, Sven, 73733 Esslingen (DE); Sittel, Stefan, 71229 Leonberg (DE)
(74) Vertreter: Koch Müller Patentanwaltsgesellschaft mbH

(57) **Zusammenfassung**

Umschaltvorrichtung mit einem ersten Personalcomputer, aufweisend ein erstes Eingabegerät zur Eingabe von Positionsinformationen und einem ersten Bildschirm mit einem ersten Anzeigebereich zur Darstellung von Informationen, einem zweiten Personalcomputer, aufweisend einen zweiten Bildschirm mit einem zweiten Anzeigebereich zur Darstellung von Informationen, wobei die Personalcomputer mittels einer ersten Verbindung verbunden sind, die Personalcomputer ein erstes Programm aufweisen und das erste Programm die relative Lage der zur Darstellung bestimmten Positionsinformationen einem Anzeigebereich zuordnet und mittels einer Umschaltfunktion über die erste Verbindung auf den mit dem zugeordneten Anzeigebereich verbundenen Personalcomputer die Eingabe der Positionsinformationen und die für die Darstellung bestimmten Positionsinformationen umleitet.

## Beschreibung

Die Erfindung betrifft eine Umschaltvorrichtung gemäß dem Oberbegriff des Patentanspruchs 1 und ein Verfahren zur Umschaltung gemäß dem Oberbegriff des Patentanspruchs 9.

Umschaltvorrichtungen zwischen Personalcomputern werden unter anderem zur Steuerung von industriellen Fertigungsprozessen eingesetzt, um beispielweise von einem Eingabegerät, d.h. einer Tastatur und oder Maus und oder einem berührungsempfindlichen Bildschirm, das mit einem ersten Personalcomputer verbunden ist, weitere Prozessgeräte an denen ebenfalls Personalcomputer angeschlossen sind, zu steuern. Insbesondere bei höheren Sicherheitsanforderungen, beispielsweise in einer explosionsgefährdeten Umgebung, ist es wünschenswert, die in dieser Umgebung befindlichen Personalcomputer von einem in einer sicheren Umgebung angeordneten Personalcomputer zu bedienen.

Voraussetzung für eine Umschaltung zwischen verschieden Personalcomputern ist eine Kommunikation bzw. Koordination zwischen den Personalcomputern, die im Allgemeinen drahtlos mittels eines Funknetzwerks und oder drahtgebunden mittels einer Netzwerkverbindung erfolgen kann. Herkömmlicherweise werden zur Umschaltung zwischen den einzelnen Personalcomputern hardwarebasierte sogenannte KM (Keyboard Maus) Umschaltgeräte verwendet, an denen eine Tatstatur und eine Maus angeschlossen wird und mit den jeweiligen Tastatur- und Maus Eingängen mit den angeschlossenen Personalcomputern verschaltet sind. Mittels Tatstaturbefehle und oder Mauszeigerbewegungen wird zwischen den einzelnen Anzeigebereichen der mit den Personalcomputern verbundenen Bildschirmen umgeschaltet. Eine derartige Umschaltvorrichtung ist aus der Druckschrift US 7 385 584 A bekannt. Nachteilig hierbei ist, dass die Anzahl der verbindbaren Personalcomputer gering und die entsprechend eingerichteten Umschaltgeräte teuer sind. Ferner muss die Tastatur ummittelbar an das Umschaltgerät angeschlossen werden. Des Weiteren ist nachteilig, dass bei einer nachträglichen Verbindung von einer bestehenden Netzwerkkonfiguration mit mehreren Personalcomputern zur Realisierung einer Fremdsteuerung durch die notwendige Änderung der Hardwarekonfiguration in sicherheitsrelevanten Bereichen eine Zertifizierung durchgeführt werden muss. Ferner ist es in einer explosionsgefährdeten Umgebung eine Änderung an einer bestehenden Hardwarekonfiguration sehr aufwändig.

Vor diesem Hintergrund besteht die erstgenante Aufgabe der Erfindung darin, eine Umschaltvorrichtung und als zweitgenannte Aufgabe ein Verfahren zur Umschaltung anzugeben, die jeweils die Nachteile des Standes der Technik verringern.

Die erstgenannte Aufgabe wird durch eine Umschaltvorrichtung mit den Merkmalen des Patentanspruchs 1, die zweitgenante Aufgabe durch ein Verfahren zur Umschaltung mit den Merkmalen des Patentanspruchs 9 gelöst. Vorteilhafte Ausgestaltungen der Erfindung sind Gegenstand von Unteransprüchen.

Gemäß dem ersten Gegenstand der Erfindung wird eine Umschaltvorrichtung mit einem ersten Personalcomputer, aufweisend ein erstes Eingabegerät zur Eingabe von Positions- und Eingabeinformationen wie insbesondere einen Cursor und einem ersten Bildschirm mit einem ersten Anzeigebereich zur Darstellung der Positions- und Eingabeinformationen, und einem zweiten Personalcomputer, aufweisend einen zweiten Bildschirm mit einem zweiten Anzeigebereich zur Darstellung von Positions- und Eingabeinformationen, bereitgestellt, wobei die Personalcomputer mittels einer ersten Verbindung verbunden sind, und die Personalcomputer ein erstes Programm aufweisen, und das erste Programm die relative Lage der zur Darstellung bestimmten Positionsinformationen bestimmt und einem der Anzeigebereiche zuordnet und das erste Programm mittels einer Umschaltfunktion über die erste Verbindung die eingegebenen Eingabeinformationen auf den mit dem zugeordneten Anzeigebereich verbundenen Personalcomputer zur Darstellung und / oder Verarbeitung umleitet. Hierdurch wird erfindungsgemäß anhand relativen Lage der Positionsinformation eine Umschaltung bewirkt, so dass die nach der Umschaltung eingegeben Eingabeinformationen auf den mit dem ausgewählten Anzeigebereich verbundenen Personalcomputer umleitet.

Gemäß dem zweiten Gegenstand der Erfindung wird ein Verfahren zur Umschaltung von einem ersten Personalcomputer mit einem ersten Eingabegerät zur Eingabe von Positions- und Eingabeinformationen und einem ersten Bildschirm mit einem ersten Anzeigebereich zur Darstellung von Positions- und Eingabeinformationen auf einen zweiten Personalcomputer mit einen zweiten Bildschirm mit einem zweiten Anzeigebereich zur Darstellung von Positions- und Eingabeinformationen bereitgestellt, wobei die Personalcomputer mittels einer ersten Verbindung verschaltet werden, und auf den Personalcomputern jeweils ein erstes Programm installiert wird und mittels des ersten Programms die relative Lage der zur Darstellung bestimmten Positionsinformationen einem der Anzeigebereiche zuordnet wird und mittels einer Umschaltfunktion des ersten Programms über die erste Verbindung die eingegebenen Eingabeinformationen auf den mit dem zugeordneten Anzeigebereich verbundenen Personalcomputer zur Darstellung und Verarbeitung umleitet werden.

Ein Vorteil der erfindungsgemäßen Ausgestaltung ist es, dass ohne zusätzliche Hardware oder hohen Datenverkehr zwischen zwei verbundenen Personalcomputern durch ein auf den Personalcomputern installiertes Programm die verbundenen Personalcomputer mittels einem einzigen Eingabegerät auf besonders einfache und kostengünstige Weise bedient und gesteuert werden können. Insbesondere bei bereits bestehenden Personalcomputersystemen, die beispielsweise in besonders gefährdeten Umgebungen vorzugsweise für die Prozesssteuerung eingerichtet sind, ist es vorteilhaft, ohne nachträgliche Änderungen an der Hardware mittels eines in sicherer Umgebung angeordneten Personalcomputers, die weiteren verbundenen Personalcomputer zuverlässig und kostengünstig zu steuern. Ein weiterer Vorteil ist es, dass mittels eines einzigen Eingabegerätes wie beispielsweise einer Tastatur und oder einer Maus und oder eines berührungsempfindlichen Eingabefeldes mehrere Personalcomputer die miteinander vernetzt sind, bedienen lassen. Hierbei ist es vorstellbar, dass sich auch beide Personalcomputer mit Ihren Anzeigebereichen in einer explosionsgefährdeten Umgebung befinden. Ein einer Weiterbildung lässt sich das oder die Eingabegeräte auch in einer sicheren Umgebung anordnen Des Weiteren lassen sich aufwändige Freigaben, die bei einer Änderung von Hardware an sicherheitsrelevanten Systemen unabdingbar sind, vermeiden.

Das zur Ausbildung einer erfindungsgemäßen Lösung eingerichtete erste Programm bestimmt die relative Lage von den darzustellenden Positionsinformationen auf dem jeweiligen Anzeigebereich. Wandert die darzustellende Positionsinformation aus dem ersten Anzeigebereich hinaus, werden die Eingabeinformationen auf den zweiten Personalcomputer übertragen und vice versa. Die übertragenen Positions- und Eingabeinformationen werden auf zweiten Personalcomputer, im Allgemeinen mittels weiterer Programme verarbeitet und der darzustellende Teil der Engabeinformation in dem Anzeigebereich des zweiten Personalcomputers dargestellt. Sobald die Positionsinformation aus dem Anzeigebereich des zweiten Personalcomputers hinauszeigt, wird mittels des ersten Programms die eingegebenen Positions- und Eingabeinformationen auf den ersten Personalcomputer zurückgestellt und die Eingabeinformationen den weiteren Dienstprogrammen des ersten Personalcomputer zur Verfügung gestellt. Untersuchungen der Anmelderin haben gezeigt, dass es beispielsweise hinreichend ist, ausschließlich die den Datenstrom des ersten Eingabegerätes mittels des ersten Programms zu überprüfen und zu einem der Anzeigebereiche zuzuordnen. Nach der erfolgten Zuordnung, die auch eine Umschaltung auf den derart ausgewählten Personalcomputer bedingt, werden die eingegeben Eingabeinformationen zur Verarbeitung dem zugeordnetem Personalcomputer bereitgestellt. Demgemäß ist der Datenverkehr zwischen den angeschlossenen Personalcomputern gering, so dass der Austausch auch ohne weiteres mit Datenverbindungen durchgeführt werden kann, deren Datenraten im Bereich von 50 Kbit/s liegen.

In einer Weiterbildung ist es bevorzugt, dass die Verarbeitung bzw. Weiterverarbeitung von eingegebenen Eingabeinformationen auf dem Personalcomputer erfolgt, dessen Anzeigebereich zur Darstellung mittels den Positionsinformationen ausgewählt wird. Insbesondere bei Eingaben zur Prozesssteuerung, d.h. wenn jeder der Personalcomputer an Prozessmaschinen angeschlossen sind, ist dies von Vorteil. Bevorzugte Eingabegeräte umfassen insbesondere eine Tastatur und oder eine Maus und oder einen Trackball und oder Videoeingabegeräte und oder einen oder mehrere Touchscreens und oder Barcodereader und oder RFID-Lesegeräte und oder Joysticks. Die Verbindung zwischen dem ersten Eingabegerät und dem ersten Personalcomputer und oder die erste Verbindung zwischen den Personalcomputern lässt sich sowohl drahtgebundenen und oder drahtlos ausführen.

Gemäß einer bevorzugten Weiterbildung ist die erste Verbindung mittels einer LAN (Local Area Network) Verbindung ausgebildet und umfasst einen Verteiler mit wenigstens einer OSI Schicht. Derartige Verteiler werden auch als "SWITCH" bezeichnet und werden im Allgemeinen zur Kopplung von mehreren Personalcomputern verwendet. In einer anderen Weiterbildung lässt sich auch ein sogenannter HUB zur Herstellung einer Verbindung zwischen den Personalcomputern benutzen. Durch die Art der Ausbildung lässt sich ein vorhandenes Netzwerk für die Realisierung der erfindungsgemäßen Lösung verwenden, ohne dass hardwareseitige Änderungen durchgeführt werden müssen. Indem die ausgetauschten Datenraten klein sind, stellt die erfindungsgemäße Lösung nur eine geringe Belastung des vorhandenen Netzwerks dar.

In einer anderen Weiterbildung wird die erste Verbindung als eine serielle Verbindung beispielsweise mittels einer RS232 oder eines USB Anschlusses ausgebildet. Hierdurch lassen sich Personalcomputer auf besonders kostengünstige Weise verbinden. Des Weiteren lassen sich die Personalcomputer auch mittels Bluetooth oder IrDA oder WLAN verbinden.

Gemäß einer Weiterbildung lassen sich durch die erfindungsgemäße Lösung eine Vielzahl von Personalcomputern, bei denen das erste Programm installiert ist, mittels einer einzigen Eingabeeinheit steuern. Hierbei ist es vorteilhaft, dass bei zwei und mehreren Eingabegeräten das erste Eingabegerät bevorrechtigt ist, d.h. eine sogenannte Master -Slave Anordnung ausgebildet wird. In einer anderen Weiterbildung lassen sich auch mehrere Master und oder Slave Anordnungen verbinden und vorzugsweise mittels eines einzigen Eingabegerätes insgesamt oder teilweise steuern. Es ist ein Vorteil der erfindungsgemäßen Lösung, dass sich eine maximale Flexibilität in der Konfiguration von vernetzten Personalcomputern erzielen lässt.

Die Erfindung wird nachfolgend unter Bezugnahme auf die Zeichnungen näher erläutert. Hierbei werden gleichartige Teile mit identischen Bezeichnungen beschriftet. Darin zeigen die:
- Figur 1: eine erste Ausführungsform mit zwei Personalcomputern,
- Figur 2: eine zweite Ausführungsform mit einer Vielzahl von Personal- computern, die mittels eines Netzwerks verbunden sind.

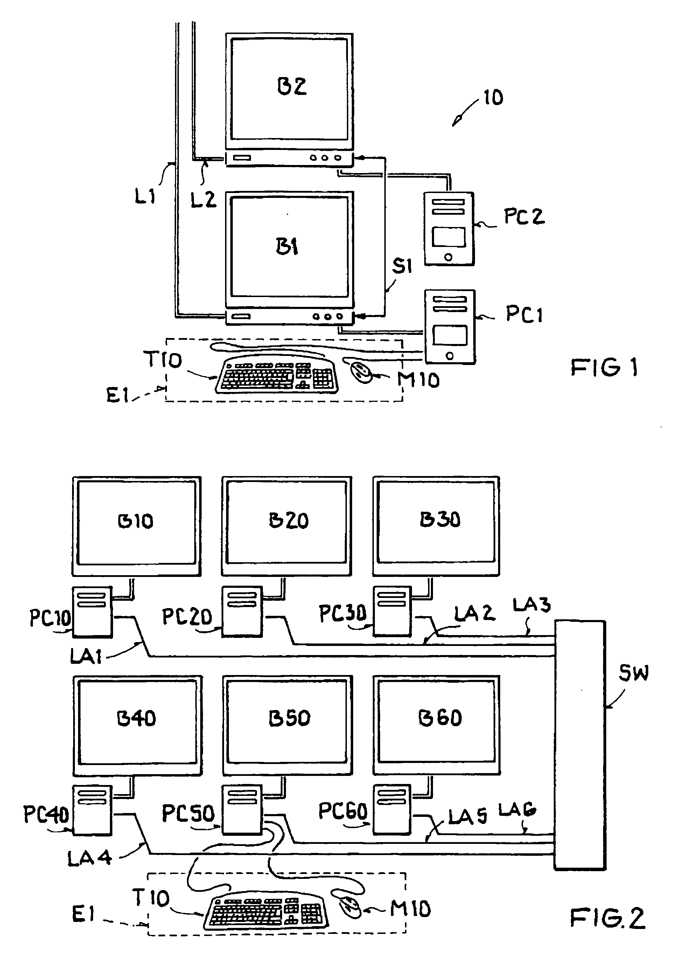

Die Abbildung der Figur 1 zeigt eine erste Ausführungsform einer Umschaltvorrichtung 10, aufweisend einen ersten Personalcomputer PC1, mit einem ersten Bildschirm mit einem ersten Anzeigebereich B1, einem ersten Netzwerkkabel L1 und einen ersten Eingabegerät E1, ausgebildet als eine Tastatur T10 und eine Maus M10, sowie einen zweiten Personalcomputer PC2 mit einem zweiten Bildschirm mit einem zweiten Anzeigebereich B2 und einem zweiten Netzwerkkabel L2. Beide Personalcomputer PC1 und PC2 sind mittels eines seriellen Verbindungskabels S1, welches vorzugsweise als RS232-Verbindung ausgebildet ist, verbunden. Auf beiden Personalcomputern PC1 und PC2 ist ein erstes Programm (nicht abgebildet) installiert. Des Weiteren sind auf den Personalcomputern PC1 und PC2 eine Vielzahl weiterer Programme installiert, wie beispielsweise Betriebssystemprogramme und Programme zur Steuerung von Prozessautomaten.

Im Folgenden wird die Funktionsweise erläutert. Mittels des auf beiden Personalcomputern PC1 und PC2 installierten ersten Programms werden die von dem ersten Eingabegerät E1 eingegebenen Positionsinformationen bzw. der relevante Eingabedatenstrom der Tastatur T10 und oder der Maus M10 daraufhin untersucht, inwiefern Daten zur Darstellung auf dem gewählten Bildschirm vorhanden sind und deren relative Lage hinsichtlich des gewählten Anzeigebereichs bestimmt. Wird durch das erste Programm erkannt, dass die zur Darstellung vorgesehenen Positionsinformationen außerhalb des bestehenden ausgewählten Anzeigebereichs befinden, werden diese auf den zweiten Personalcomputer PC2 mit dem zweiten Anzeigebereich B2 umgeschaltet. Die Positions- und Eingabeinformationender Tastatur T10 und oder der Maus M10 wird mittels der ersten Verbindung S1 von dem ersten Personalcomputer PC1 auf den zweiten Personalcomputer PC2 umgeleitet. Hierdurch werden auch die eingegebenen Eingabeinformationen aus den Eingabegeräten, vorzugsweise der Tastatur T10 und / oder der Maus M10 den weiteren auf den jeweiligen Personalcomputern installierten Dienstprogrammen zur Verarbeitung zur Verfügung gestellt. Sofern mehrere Eingabegeräte an unterschiedliche Personalcomputer angeschlossen sind, lassenisch in einer Ausführungsform mittels der erfindungsgemäßen Umschaltvorrichtung bzw. mittels des erfindungsgemäßen Verfahrens Positions- und Eingabeinformationen im Fall von mehreren Eingabegeräten aller nicht bevorrechtigten Eingabegräten wirkungsvoll unterdrücken.

In der Darstellung der Figur 2 ist ein Personalcomputer PC10, auf dem das erste Programm installiert ist, aufweisend einen Bildschirm mit einem Anzeigebereich B10 mittels eines Netzwerkkabel LA1 mit einem Switch SW verschaltet. Derartige Switche oder auch Hubs sind notwendig, um beispielsweise mittels eines Ethernet-Verbindung mehrere Personalcomputer miteinander in einem Netzwerk zu verbinden. Auch ist gemäß einer Weiterbildung auch eine sternförmige Verbindung eines Masters vorzugsweise mittels N-1 seriellen Verbindungen zu den jeweiligen Slaves durchführbar. Hierbei ist es hinreichend, dass die Verbindungsgeräte vorzugsweise eine OSI 2, höchst vorzugsweise eine OSI 1 Schicht aufweisen. Des Weiteren ist ein Personalcomputer PC20, auf dem das erste Programm installiert ist, aufweisend einen Bildschirm mit einem Anzeigebereich B20 mittels eines Netzwerkkabel LA2 mit dem Switch SW verschaltet. Ferner ist ein Personalcomputer PC30, auf dem das erste Programm installiert ist, aufweisend einen Bildschirm mit einem Anzeigebereich B30 mittels eines Netzwerkkabel LA3 mit dem Switch SW verschaltet. Außerdem ist ein Personalcomputer PC40, auf dem das erste Programm installiert ist, aufweisend einen Bildschirm mit einem Anzeigebereich B40 mittels eines Netzwerkkabel LA4 mit dem Switch SW verschaltet. Des Weiteren ist ein Personalcomputer PC50, auf dem das erste Programm installiert ist, aufweisend einen Bildschirm mit einem Anzeigebereich B50, eine Tastatur T10 und eine Maus M10 mittels eines Netzwerkkabel LA5 mit dem Switch SW verschaltet. Ferner ist ein Personalcomputer PC60, auf dem das erste Programm installiert ist, aufweisend einen Bildschirm mit einem Anzeigebereich B60 mittels eines Netzwerkkabel LA6 mit dem Switch SW verschaltet.

Wird nun vorzugsweise mittels der Maus M10 der Mauszeiger über den Anzeigebereich B50 des Personalcomputers PC50, das vorzugsweise als Master ausgebildet ist, hinaus bewegt, werden die eingegebenen Positionsinformationen und in Folge dann auch die eingegebenen Eingabeinformationen auf einen benachbarten Anzeigebereich eines Personalcomputers umgeleitet. Hierdurch erhält der zugeordnete Personalcomputer den Eingabefokus, ist also ausgewählt und aktiv. Es ist vorteilhaft, dass alle anderen Personalcomputer inaktiv werden.

In der vorliegenden Ausführungsform wird dem ersten Programm hierfür die Anzahl der Personalcomputer bzw. deren Netzwerkkennung vorzugsweise die IP Adresse mitgeteilt. Des Weiteren wird die Anordnung des dem jeweiligen Personalcomputer zugeordneten Bildschirms dem ersten Programm mitgeteilt. Wird nun vorliegend beispielsweise der Mauszeiger nach rechts aus dem Anzeigebereich B50 hinausbewegt, wird mittels des ersten Programms der Eingabedatenstrom auf dem PC60 mit dem Anzeigebereich B60 umgeleitet und der Mauszeiger ausschließlich auf dem Anzeigebereich B60 dargestellt. Wird der Mauszeiger bei dem Anzeigebereich B60 nach rechts über den Anzeigebereich hinausbewegt, wird der Mauszeiger auf dem Anzeigebereich B40 dargestellt und vice versa. Wird der Mauszeiger auf von dem Anzeigebereich B40 nach oben oder nach unten über den Anzeigebereich hinausbewegt, wird der Mauszeiger auf dem Bildschirm B10 dargestellt. Entsprechend wird der Mauszeiger auf den Anzeigebereichen B20 bzw. B30 dargestellt, wenn beispielsweise der Mauszeiger ausgehend von einem Mauszeiger innerhalb des Anzeigebereichs B10 immer weiter nach rechts bewegt wird, um schließlich wieder von der linken Seite auf dem Anzeigebereich B10 dargestellt wird.

In Folge der Umschaltung werden die Eingabeinformationen der Tatstatur T10 und der Maus M10 auf die mit den Bildschirmen verbundenen Personalcomputern PC10 bis PC60 umgeleitet, so dass die verbundenen Personalcomputer PC10 bis PC60 mit einer einzigen Maus und oder Tastatur gesteuert werden. Befindet sich der Mauszeiger beispielsweise auf dem Anzeigebereich B50 lässt sich mittels der eingegebenen Eingabeinformationen die Dienstprogramme des PC50 beeinflussen. Die benachbarten Personalcomputer verrichten gleichzeitig die programmierten Überwachungsaufgaben und / oder Steuerungsaufgaben.

## Patentansprüche

1. Umschaltvorrichtung (10) mit,
einem ersten Personalcomputer (PC1, PC50), aufweisend ein erstes Eingabegerät (E1) zur Eingabe von Positionsinformationen und einem ersten Bildschirm mit einem ersten Anzeigebereich (B1, B10) zur Darstellung von Informationen,
einem zweiten Personalcomputer (PC2, PC10 - PC40, PC60), aufweisend einen zweiten Bildschirm mit einem zweiten Anzeigebereich (B2, B10 - B40, B60) zur Darstellung von Positionsinformationen,
wobei die Personalcomputer (PC1, PC2, PC10- PC60) mittels einer ersten Verbindung (S1, LA1 - LA6) verbunden sind,
**dadurch gekennzeichnet, dass**
die Personalcomputer (PC1, PC2, PC10- PC60) ein erstes Programm aufweisen und das erste Programm die relative Lage der zur Darstellung bestimmten Positionsinformationen bestimmt und einem Anzeigebereich (B1, B2, B10- B60) zuordnet und mittels einer Umschaltfunktion über die erste Verbindung (S1, LA1 - LA6) die eingegebenen Positionsinformationen auf den mit dem zugeordneten Anzeigebereich (B1, B2, B10- B60) verbundenen Personalcomputer (PC1, PC2, PC10- PC60) zur Darstellung umleitet.

2. Umschaltvorrichtung (10) nach Anspruch 1, **dadurch gekennzeichnet, dass** eine Verarbeitung von eingegebenen Positionsinformationen auf dem Personalcomputer (PC1, PC2, PC10- PC60) erfolgt, dessen Anzeigebereich (B1, B2, B10- B60) zur Darstellung von Positionsinformationen ausgewählt wird.

3. Umschaltvorrichtung (10) nach Anspruch 1 oder Anspruch 2, **dadurch gekennzeichnet, dass** das erste Eingabegerät (E1) eine Tastatur (T10) und oder eine Maus (M10) umfasst.

4. Umschaltvorrichtung (10) nach einem der Ansprüche 1 bis 3, **dadurch gekennzeichnet, dass** die erste Verbindung (S1, LA1 - LA6) als drahtgebundene oder drahtlose Verbindung ausgeführt ist.

5. Umschaltvorrichtung (10) nach einem der Ansprüche 1 bis 4, **dadurch gekennzeichnet, dass** die erste Verbindung (S1, LA1 - LA6) einen Verteiler (SW) mit wenigstens einer OSI Schicht umfasst.

6. Umschaltvorrichtung (10) nach einem der Ansprüche 1 bis 5, **dadurch gekennzeichnet, dass** die erste Verbindung (S1, LA1 - LA6) als eine serielle Verbindung ausgebildet ist.

7. Umschaltvorrichtung (10) nach einem der Ansprüche 1 bis 6, **dadurch gekennzeichnet, dass** eine Vielzahl von Personalcomputern (PC1, PC2, PC10-PC60) ein erstes Programm aufweisen.

8. Umschaltvorrichtung (10) nach einem der Ansprüche 1 bis 7, **dadurch gekennzeichnet, dass** bei mehreren Eingabegeräten das erste Eingabegerät (E1) bevorrechtigt ist.

9. Verfahren zur Umschaltung von einem ersten Personalcomputer (PC1, PC2, PC10- PC60) mit einem ersten Eingabegerät (E1) zur Eingabe von Positionsinformationen und einem ersten Bildschirm mit einem ersten Anzeigebereich (B1, B2, B10 - B60) zur Darstellung von Positionsinformationen auf einen zweiten Personalcomputer (PC1, PC2, PC10 - PC60) mit einen zweiten Bildschirm mit einem zweiten Anzeigebereich (B1, B2, B10 - B60) zur Darstellung von Positionsinformationen,
die Personalcomputer (PC1, PC2, PC10- PC60) mittels einer ersten Verbindung (S1, LA1 - LA6) verschaltet werden,
**dadurch gekennzeichnet, dass**
auf den Personalcomputern (PC1, PC2, PC10- PC60) jeweils ein erstes Programm installiert wird,
mittels des ersten Programms die relative Lage der zur Darstellung bestimmten Positionsinformationen bestimmt wird und einem Anzeigebereich (B1, B2, B10 - B60) zuordnet wird, und
mittels einer Umschaltfunktion des ersten Programms über die erste Verbindung (S1, LA1 - LA6) auf den mit dem zugeordneten Anzeigebereich (B1, B2, B10 - B60) verbundenen Personalcomputer (PC1, PC2, PC10-PC60) zur Darstellung umleitet werden.

10. Verfahren zur Umschaltung nach Anspruch 9, **dadurch gekennzeichnet, dass** eine Verarbeitung von eingegebenen Positionsinformationen mittels des Personalcomputers (PC1, PC2, PC10- PC60) durchgeführt wird, dessen Anzeigebereich (B1, B2, B10 - B60) zur Darstellung von Positionsinformationen ausgewählt wird.

11. Verfahren zur Umschaltung nach Anspruch 9 oder Anspruch 10, **dadurch gekennzeichnet, dass** die Eingabe von Positionsinformationen mittels einer Tastatur (T10) und oder einer Maus (M10) durchgeführt wird.

12. Verfahren zur Umschaltung nach einem der Ansprüche 9 bis 11, **dadurch gekennzeichnet, dass** die erste Verbindung (S1, LA1 - LA6) als drahtgebundene oder drahtlose Verbindung ausgeführt wird.

13. Verfahren zur Umschaltung nach einem der Ansprüche 9 bis 12, **dadurch gekennzeichnet, dass** die Umleitung von Positionsinformationen mittels eines ersten Verteilers (SW) mit wenigstens einer OSI Schicht Verbindung durchgeführt wird.

14. Verfahren zur Umschaltung nach einem der Ansprüche 9 bis 13, **dadurch gekennzeichnet, dass** eine Vielzahl von Personalcomputern (B1, B2, B10 - B60) verbunden werden.

15. Verfahren zur Umschaltung nach einem der Ansprüche 9 bis 14, **dadurch gekennzeichnet, dass** bei einem Anschluss von mehreren Eingabegeräten an mehreren Personalcomputern (B1, B2, B10 - B60) die Eingabe des ersten Eingabegeräts (E1) bevorrechtigt verarbeitet und dargestellt wird.
